# EUROPEAN PATENT APPLICATION

(11) **EP 4 290 663 A1**
(43) Date of publication of application: **13.12.2023**
(21) Application number: 22919393.3
(22) Date of filing: 12.01.2022
(51) Int. Cl.: H01M 50/342, B60L 50/64

(54) **BATTERY, POWER CONSUMING DEVICE AND METHOD FOR MANUFACTURING BATTERY**

(71) Applicant: Contemporary Amperex Technology Co., Limited, Ningde, Fujian 352100 (CN)
(72) Inventor: CHEN, Zonghui, Ningde, Fujian 352100 (CN); LIU, Jianhua, Ningde, Fujian 352100 (CN)
(74) Representative: Thoma, Michael
(86) International application number: PCT/CN2022/071601
(87) International publication number: WO 2023/133728

(57) **Abstract**

Some embodiments of this application provide a battery, an electrical device, and a battery manufacturing method. The battery includes a plurality of battery cells, a fume collecting component, and an exhaust pipe. The battery cells include an explosion-proof valve. The fume collecting component is disposed on a side of the battery cells, the side on which the explosion-proof valve is disposed. The fume collecting component includes a fume collecting chamber. The fume collecting chamber is in fluid communication with a pressure relief port of the explosion-proof valve. The exhaust pipe is in fluid communication with the fume collecting chamber and is configured to guide a gas in the fume collecting chamber to a preset position. The electrical device includes the battery. In this application, the fume collecting component collects the gas flowing out through the explosion-proof valve, and the exhaust pipe expels the gas to a preset position, thereby implementing directional exhausting of fume and preventing the gas from diffusing to a passenger compartment to threaten personal safety of passengers.

## Description

### TECHNICAL FIELD

This application relates to the field of battery technology, and in particular, to a battery, an electrical device, and a battery manufacturing method.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

Fume exhausting after the battery is thermally runaway is an important issue of increasing interest to battery users.

### SUMMARY

This application provides a battery, an electrical device, and a battery manufacturing method to implement directional exhausting of fumes.

According to a first aspect, this application provides a battery, including:
a plurality of battery cells, where the battery cells include an explosion-proof valve;
a fume collecting component, disposed on a side of the battery cells, the side on which the explosion-proof valve is disposed, where the fume collecting component includes a fume collecting chamber, and the fume collecting chamber is in fluid communication with a pressure relief port of the explosion-proof valve; and
an exhaust pipe, fluidly communicating with the fume collecting chamber and configured to guide a gas in the fume collecting chamber to a preset position.

By disposing the fume collecting component onto the side of the battery cells, the side on which the explosion-proof valve is disposed, the gas flowing out through the explosion-proof valve can be collected in time, thereby reducing the possibility of the gas diffusing to positions outside the fume collecting component, and facilitating directional exhausting of fumes.

By disposing the fume collecting chamber, the fumes can be collected first. In contrast to the exhaust pipe, the space of the fume collecting chamber is relatively large and can accommodate more gas, thereby avoiding an impact on the exhaust pipe caused by massive gas accumulation at the moment of bursting the explosion-proof valve open.

By means of the exhaust pipe disposed, the gas collected by the fume collecting component can be guided to the preset position, thereby implementing directional exhausting of fumes and preventing the gas in the battery from entering the passenger compartment to threaten the personal safety of passengers.

In some embodiments, the battery further includes a harness plate. The harness plate is mounted on the plurality of battery cells. The fume collecting component is connected to the harness plate. The harness plate includes a first through-hole that implements fluid communication between the pressure relief port of the explosion-proof valve and the fume collecting chamber.

A harness plate is generally disposed in the battery to fix the connection wires of a plurality of battery cells. By connecting the fume collecting component to the harness plate, the harness plate can work in conjunction with the fume collecting component to implement the fume collecting function without disrupting the original structure of the battery. By creating a first through-hole on the harness plate, the gas flowing out through the explosion-proof valve can flow into the fume collecting chamber through the first through-hole.

In some embodiments, the battery further includes a connection wire configured to be electrically connected to the battery cells. The connection wire is fixed to a side of the fume collecting component, the side being away from the battery cells.

By fixing the connection wire to the side of the fume collecting component, the side being away from the battery cell, the fume collecting component can be arranged between the connection wire and the harness plate. The fume collecting component can be disposed by using the space configured to arrange the connection wire. In addition, the fume collecting component provides a mounting space for the connection wire without affecting the layout of the connection wire.

In some embodiments, a groove is created on the side of the fume collecting component, the side being away from the battery cells. The connection wire is fixed in the groove.

By creating the groove, the position of the connection wire can be limited, and the connection wire can be accommodated in the groove to prevent the connection wire from being entangled or interfering with others.

In some embodiments, the battery further includes a sealing element disposed between the pressure relief port of the explosion-proof valve and the fume collecting chamber. By disposing the sealing element, the gas can be prevented from diffusing to positions outside the fume collecting component, so that the gas can flow along a preset route as much as possible to implement directional exhausting of fumes.

In some embodiments, the sealing element includes a first sealing element disposed between the harness plate and the fume collecting component. The first sealing element includes a second through-hole that communicates the first through-hole to the fume collecting chamber.

By disposing the first sealing element, the inlet of the fume collecting chamber is caused to be airtight to prevent the gas from escaping out through a gap between the harness plate and the fume collecting component while the gas enters the fume collecting chamber after flowing out from the first through-hole.

In some embodiments, the sealing element includes a second sealing element disposed between the harness plate and the battery cells. The second sealing element includes a third through-hole that exposes the explosion-proof valve.

By disposing the second sealing element, the pressure relief port of the explosion-proof valve can be sealed to prevent the gas from escaping out while the gas flows along the harness plate after flowing out from the pressure relief port of the explosion-proof valve.

In some embodiments, the plurality of battery cells are arranged side by side along a first direction. The fume collecting chamber extends along the first direction to cover the explosion-proof valve of the plurality of battery cells. The fume collecting chamber may cover a plurality of battery cells concurrently to implement centralized collection of the gas leaked from a plurality of battery cells.

In some embodiments, the exhaust pipe is connected to a side of the fume collecting chamber, the side being perpendicular to the first direction. The exhaust pipe includes a part parallel to the first direction.

By disposing the exhaust pipe on a side of the fume collecting chamber and letting the exhaust pipe include a part parallel to the first direction, the exhaust pipe is prevented from affecting the internal structure of the battery, it is convenient to expand the volume of the fume collecting chamber, and the impact caused by instantaneous pressure relief of the battery onto the exhaust pipe is reduced.

In some embodiments, the battery further includes a housing, a first feeding pipe, and a second feeding pipe. The fume collecting component and the plurality of battery cells are disposed in the housing. Both the first feeding pipe and the second feeding pipe communicate with an inner space of the housing. The first feeding pipe is configured to feed a cooling gas into the inner space of the housing. The second feeding pipe is configured to expel a gas out of the inner space of the housing. The exhaust pipe is fluidly isolated from the first feeding pipe and the second feeding pipe.

The exhaust pipe is fluidly isolated from the first feeding pipe and the second feeding pipe, thereby preventing the gas leaked through the explosion-proof valve from diffusing into the passenger compartment through the first feeding pipe or the second feeding pipe, and avoiding causing safety hazards to passengers.

According to a second aspect, this application provides an electrical device, including the battery. The battery is configured to supply electrical energy to the electrical device.

According to a third aspect, this application provides a battery manufacturing method, including:
providing a plurality of battery cells, a fume collecting component, and an exhaust pipe, where the battery cells include an explosion-proof valve, and the fume collecting component includes a fume collecting chamber; and
fitting the fume collecting component onto a side of the battery cells, the side on which the explosion-proof valve is disposed, where a pressure relief port of the explosion-proof valve is in fluid communication with the fume collecting chamber, and the exhaust pipe is in fluid communication with the fume collecting chamber to guide a gas in the fume collecting chamber to a preset position.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is an exploded view of a battery according to some embodiments of this application;
FIG. 2 is an exploded view of a partial structure of a battery according to some embodiments of this application;
FIG. 3 is a schematic structural diagram of a battery according to some embodiments of this application;
FIG. 4 is a close-up view of a part W shown in FIG. 3;
FIG. 5 is a schematic bottom view of a fume collecting component of a battery according to some embodiments of this application;
FIG. 6 is a schematic top view of a fume collecting component of a battery according to some embodiments of this application;
FIG. 7 is a schematic structural diagram of a first sealing element of a battery according to some embodiments of this application; and
FIG. 8 is a schematic structural diagram of a second sealing element of a battery according to some embodiments of this application.

The drawings are not drawn to scale.

### List of reference numerals:

1. battery cell; 11. explosion-proof valve; 2. fume collecting component; 21. fume collecting chamber; 22. groove; 3. exhaust pipe; 4. harness plate; 41. first through-hole; 42. bolt; 5. connection wire; 6. wire clip; 7. cover plate; 8. first sealing element; 81. second through-hole; 9. second sealing element; 91. third through-hole.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In addition, the term "perpendicular" does not means exact perpendicularity, but means perpendicularity falling within an error tolerance range. "Parallel" does not mean exact parallelism, but means parallelism falling within an error tolerance range.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of the embodiments of this application, unless otherwise expressly specified, the term "a plurality of" means two or more. Similarly, unless otherwise expressly defined, "a plurality of groups" means two or more groups, and "a plurality of pieces" means two or more pieces.

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally connected; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

The inventor of this application has noticed that, when a battery is faulty, a large amount of flammable gas may be generated inside the battery, thereby significantly increasing the internal gas pressure in the battery. If measures are not taken in time, the battery is prone to explode. To prevent the battery from exploding, an explosion-proof valve is usually disposed above or below a housing of the battery. The explosion-proof valve is also referred to as a safety valve. A pressure value tolerable by the explosion-proof valve is less than a pressure value tolerable by other parts of the battery. When the internal pressure of the battery is abnormal and rises to a specified level, the explosion-proof valve will be broken by the compression of the internal pressure, so that the internal pressure of the battery can be relieved in time to prevent explosion caused by excessive internal pressure of the battery.

The inventor has also noticed that, when a battery pack is thermally runaway, the internal pressure of the battery reaches a bursting pressure of the explosion-proof valve and bursts the explosion-proof valve open, so that the gas in the battery is released to the outside of the battery. For a battery that adopts an air cooling mode, the cooling gas blows out from a passenger compartment. Therefore, after the battery is depressurized through the explosion-proof valve, the gas expelled from the battery may diffuse into the passenger compartment. The passenger compartment is suddenly flooded with a large amount of gas, thereby cause distress to passengers. In addition, the temperature of the gas may be very high, and may pose a threat to personal safety of passengers.

Based on the above findings, the inventor comes up with an idea of mounting a directional fume exhaust structure on the battery, so that the gas expelled out of the battery through the explosion-proof valve is exhausted by a preset directional fume exhaust structure along a preset path. This prevents the gas from entering the passenger compartment, causing distress to passengers, or endangering the personal safety of passengers.

Based on the above inventive idea, the inventor has improved the structure of the battery.

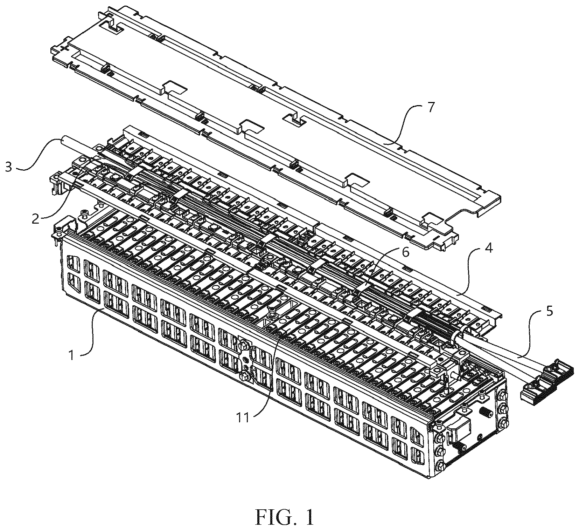

As shown in FIG. 1 to FIG. 5, in some embodiments of the battery provided in the present invention, the battery includes a fume collecting component 2, an exhaust pipe 3, and a plurality of battery cells 1. The battery cells 1 include an explosion-proof valve 11. The fume collecting component 2 is disposed on a side of the battery cells 1, the side on which the explosion-proof valve 11 is disposed. The fume collecting component 2 includes a fume collecting chamber 21. The fume collecting chamber 21 is in fluid communication with a pressure relief port of the explosion-proof valve 11. The exhaust pipe 3 is in fluid communication with the fume collecting chamber 21 and is configured to guide a gas in the fume collecting chamber 21 to a preset position.

In the above embodiments, when the internal pressure of the battery reaches a bursting pressure of the explosion-proof valve 11, the explosion-proof valve 11 will rupture. The gas in the battery is released through the explosion-proof valve 11 to prevent the battery from exploding.

By disposing the fume collecting component 2 onto the side of the battery cells 1, the side on which the explosion-proof valve 11 is disposed, the gas flowing out through the explosion-proof valve 11 can be collected in time, thereby reducing the possibility of the gas diffusing to positions outside the fume collecting component 2, and facilitating directional exhausting of fumes.

By disposing the fume collecting chamber 21, the fumes can be collected first. In contrast to the exhaust pipe 3, the space of the fume collecting chamber 21 is relatively large and can accommodate more gas, thereby avoiding an impact on the exhaust pipe 3 caused by massive gas accumulation at the moment of bursting the explosion-proof valve 11 open.

By means of the exhaust pipe 3 disposed, the gas collected by the fume collecting component 2 can be guided to the preset position, thereby implementing directional exhausting of fumes and preventing the gas in the battery from entering the passenger compartment to threaten the personal safety of passengers.

In some embodiments, the battery further includes a harness plate 4. The harness plate 4 is mounted on the plurality of battery cells 1. The fume collecting component 2 is connected to the harness plate 4. The harness plate 4 includes a first through-hole 41 that implements fluid communication between the pressure relief port of the explosion-proof valve 11 and the fume collecting chamber 21.

A harness plate 4 is generally disposed in the battery to fix the connection wires of a plurality of battery cells 1. By connecting the fume collecting component 2 to the harness plate 4, the harness plate 4 can work in conjunction with the fume collecting component 2 to implement the fume collecting function without disrupting the original structure of the battery.

By creating a first through-hole 41 on the harness plate 4, the gas flowing out through the explosion-proof valve 11 can flow into the fume collecting chamber 21 through the first through-hole 41.

In some embodiments, a plurality of first through-holes 41 are created on the harness plate 4. The first through-holes 41 are disposed in one-to-one correspondence with the explosion-proof valves 11. In this way, the gas escaped from each explosion-proof valve 11 can flow into the fume collecting chamber 21 through the corresponding first through-hole 41, thereby maximally shortening the flow path of the gas and reducing the escape of gas.

In some embodiments, the battery further includes a connection wire 5 configured to be electrically connected to the battery cells 1. The connection wire 5 is fixed to a side of the fume collecting component 2, the side being away from the battery cells 1.

By fixing the connection wire 5 to the side of the fume collecting component 2, the side being away from the battery cell 1, the fume collecting component 2 can be arranged between the connection wire 5 and the harness plate 4. The fume collecting component 2 can be disposed by using the space configured to arrange the connection wire 5. In addition, the fume collecting component 2 provides a mounting space for the connection wire 5 without affecting the layout of the connection wire 5.

The connection wire 5 may include a sampling line configured to collect voltage or temperature of the battery cell 1, and may include a connection wire configured to connect the battery cell 1 and an electrical component.

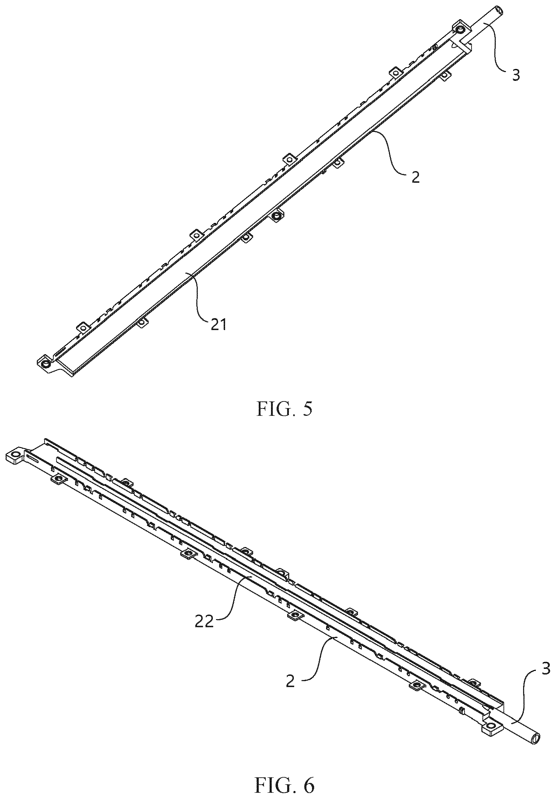

As shown in FIG. 6, in some embodiments, a groove 22 is created on the side of the fume collecting component 2, the side being away from the battery cells 1. The connection wire 5 is fixed in the groove 22.

By creating the groove 22, the position of the connection wire 5 can be limited, and the connection wire 5 can be accommodated in the groove 22 to prevent the connection wire 5 from being entangled or interfering with others.

In some embodiments, the battery further includes a sealing element disposed between the pressure relief port of the explosion-proof valve 11 and the fume collecting chamber 21. By disposing the sealing element, the gas can be prevented from diffusing to positions outside the fume collecting component 2, so that the gas can flow along a preset route as much as possible to implement directional exhausting of fumes.

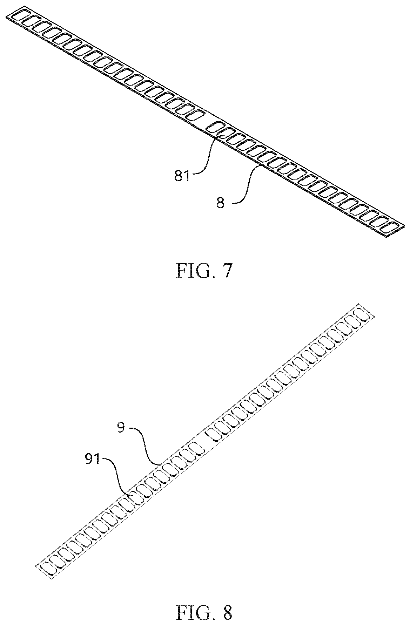

As shown in FIG. 7, in some embodiments, the sealing element includes a first sealing element 8 disposed between the harness plate 4 and the fume collecting component 2. The first sealing element 8 includes a second through-hole 81 that communicates the first through-hole 41 to the fume collecting chamber 21.

By disposing the first sealing element 8, the inlet of the fume collecting chamber 21 is caused to be airtight to prevent the gas from escaping through a gap between the harness plate 4 and the fume collecting component 2 while the gas enters the fume collecting chamber 21 after flowing out from the first through-hole 41.

By creating the second through-hole 81, the first through-hole 41 is caused to communicate with the fume collecting chamber 21, thereby preventing the airtightness effect from blocking gas from entering the fume collecting chamber 21.

As shown in FIG. 8, in some embodiments, the sealing element includes a second sealing element 9 disposed between the harness plate 4 and the battery cells 1. The second sealing element 9 includes a third through-hole 91 that exposes the explosion-proof valve 11.

By disposing the second sealing element 9, the pressure relief port of the explosion-proof valve 11 can be sealed to prevent the gas from escaping out while the gas flows along the harness plate 4 after flowing out from the pressure relief port of the explosion-proof valve 11.

In some embodiments, the shape of the third through-hole 91 is the same as the shape of the pressure relief port of the explosion-proof valve 11. The opening area of the third through-hole 91 is equal to or slightly greater than the opening area of the pressure relief port of the explosion-proof valve 11. In this way, the gas that flows out through the explosion-proof valve 11 is caused to fully flow to the fume collecting chamber 21 as much as possible through the third through-hole 91, thereby preventing the gas from escaping out through the gap between the harness plate 4 and the battery cell 1.

The first sealing element 8 may be identical to or different from the second sealing element 9 in structure. The first sealing element 8 and the second sealing element 9 may be in the form of a rubber pad or the like. The first sealing element 8 and the second sealing element 9 may be fixed by bonding, so as to prevent the first sealing element 8 and the second sealing element 9 from moving and impairing the sealing effect.

In some embodiments, the plurality of battery cells 1 are arranged side by side along a first direction. The fume collecting chamber 21 extends along the first direction to cover the explosion-proof valve 11 of the plurality of battery cells 1.

The fume collecting chamber 21 may cover a plurality of battery cells 1 concurrently to implement centralized collection of the gas leaked from a plurality of battery cells 1.

In some embodiments, the exhaust pipe 3 is connected to a side of the fume collecting chamber 21, the side being perpendicular to the first direction. The exhaust pipe 3 includes a part parallel to the first direction.

By disposing the exhaust pipe 3 on a side of the fume collecting chamber 21 and letting the exhaust pipe 3 include a part parallel to the first direction, the exhaust pipe 3 is prevented from affecting the internal structure of the battery, it is convenient to expand the volume of the fume collecting chamber 21, and the impact caused by instantaneous pressure relief of the battery onto the exhaust pipe 3 is reduced.

In some embodiments, the battery further includes a housing, a first feeding pipe, and a second feeding pipe. The fume collecting component 2 and the plurality of battery cells 1 are disposed in the housing. Both the first feeding pipe and the second feeding pipe communicate with an inner space of the housing. The first feeding pipe is configured to feed a cooling gas into the inner space of the housing. The second feeding pipe is configured to expel a gas out of the inner space of the housing. The exhaust pipe 3 is fluidly isolated from the first feeding pipe and the second feeding pipe.

With the first feeding pipe disposed, a cooling gas can be fed into the inner space of the housing to lower the temperature of the internal structure of the housing. With the second feeding pipe disposed, the heated cooling gas can be exhausted to take away the heat absorbed in the housing.

The exhaust pipe 3 is fluidly isolated from the first feeding pipe and the second feeding pipe, thereby preventing the gas leaked through the explosion-proof valve 11 from diffusing into the passenger compartment through the first feeding pipe or the second feeding pipe, and avoiding causing safety hazards to passengers.

Based on the battery described in each of the foregoing embodiments, this application further provides an electrical device. The electrical device includes the battery. The battery is configured to supply electrical energy to the electrical device.

The present invention further provides a battery manufacturing method, including:
providing a plurality of battery cells 1, a fume collecting component 2, and an exhaust pipe 3, where the battery cells 1 include an explosion-proof valve 11, and the fume collecting component 2 includes a fume collecting chamber 21; and
fitting the fume collecting component 2 onto a side of the battery cells 1, the side on which the explosion-proof valve 11 is disposed, where a pressure relief port of the explosion-proof valve 11 is in fluid communication with the fume collecting chamber 21, and the exhaust pipe 3 is in fluid communication with the fume collecting chamber 21 to guide a gas in the fume collecting chamber 21 to a preset position.

A battery manufactured by the battery manufacturing method according to this application can implement directional exhausting of fumes after the explosion-proof valve is burst open, so as to prevent the fumes from entering the passenger compartment to threaten the safety of passengers.

The following describes the structure of a battery according to an embodiment of this application with reference to FIG. 1 to FIG. 8.

As shown in FIG. 1, the battery includes a housing and a cover plate 7. The housing includes an opening, and the cover plate 7 is configured to close the opening of the housing. An accommodation space is provided in the housing. A plurality of battery cells 1 are disposed in the housing. The plurality of battery cells 1 are arranged side by side along a first direction. The battery cells 1 are in the shape of a cuboid, and the housing is also in the shape of a cuboid. An explosion-proof valve 11 is disposed on top of each battery cell 1. A harness plate 4 is disposed above the explosion-proof valve 11. A fume collecting component 2 is disposed above the harness plate 4. A connection wire 5 is disposed on top of the fume collecting component 2. The connection wire 5 is fixed onto the fume collecting component 2 through a plurality of wire clips 6. The exhaust pipe 3 is connected to a side of the fume collecting component 2.

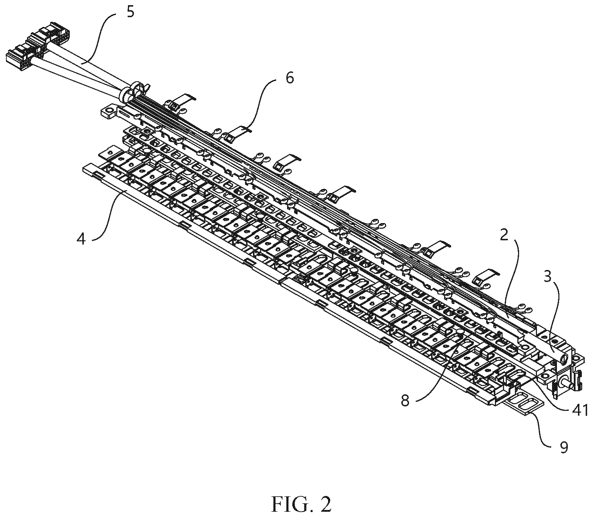

As shown in FIG. 2, a plurality of first through-holes 41 are created in the harness plate 4. The plurality of first through-holes 41 are arranged corresponding to the explosion-proof valves 11 on the plurality of battery cells 1. Each first through-hole 41 is in a rectangular shape that is identical to the shape of the pressure relief port of the explosion-proof valve 11.

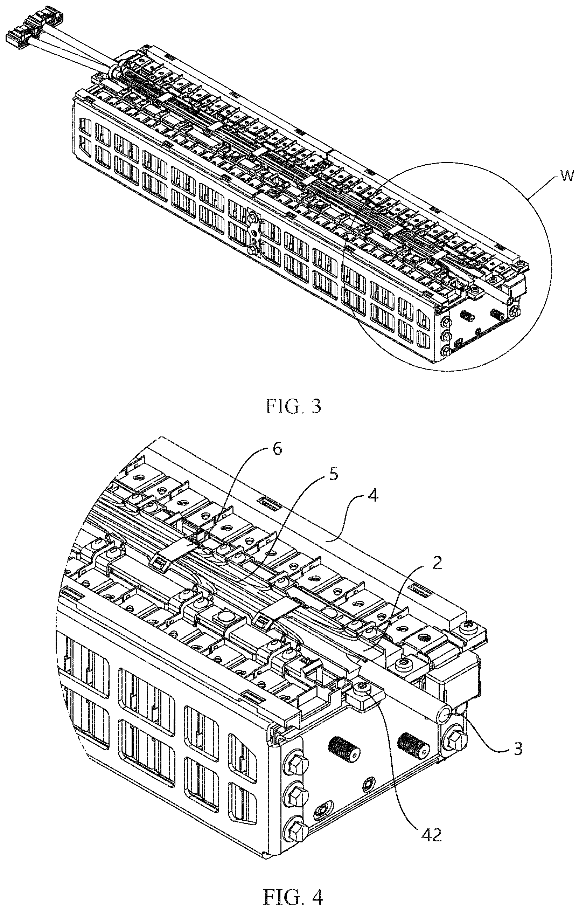

As shown in FIG. 3 and FIG. 4, the fume collecting component 2 is connected to the harness plate 4 by a bolt 42.

In other embodiments, the fume collecting component 2 is connected to the harness plate 4 by a rivet instead; or, an end portion of the fume collecting component 2 is connected to an end portion of the harness plate 4 by a bolt 42, and a middle part of the fume collecting component is connected to a middle part of the harness plate by a plurality of rivets.

As shown in FIG. 5, the fume collecting component 2 is in an elongated shape. The fume collecting component 2 includes a fume collecting chamber 21. The fume collecting chamber 21 is opened toward the harness plate 4. The harness plate 4 is configured to close the opening of the fume collecting chamber 21. The fume collecting chamber 21 covers all the first through-holes 41 on the harness plate 4. A length direction of the fume collecting component 2 is parallel to the first direction. The exhaust pipe 3 is in communication with the fume collecting cavity 21, and is located on a side of the fume collecting component 2. The exhaust pipe 3 includes a part parallel to the first direction.

As shown in FIG. 6, two parallel grooves 22 are created on a side of the fume collecting component 2, the side being away from the harness plate 4. The connection wire 5 is disposed in the grooves 22.

As shown in FIG. 7, the first sealing element 8 is in an elongated shape. The length direction of the first sealing element 8 is parallel to the first direction. The first sealing element 8 is disposed between the fume collecting component 2 and the harness plate 4. The first sealing element 8 is configured to implement airtightness between the fume collecting component 2 and the harness plate 4. A plurality of second through-holes 81 arranged along the first direction are created in the first sealing element 8, so that the gas passing through the first through-holes 41 can enter the fume collecting chamber 21 through the second through-holes 81.

As shown in FIG. 8, the second sealing element 9 is in an elongated shape. The length direction of the second sealing element 9 is parallel to the first direction. The second sealing element 9 is disposed between the battery cell 1 and the harness plate 4. A plurality of third through-holes 91 that expose the explosion-proof valve 11 are created on the second sealing element 9. The plurality of third through-holes 91 are arranged along the first direction. The second sealing element 9 is configured to implement airtightness between the battery cell 1 and the harness plate 4.

Although this application has been described with reference to illustrative embodiments, various improvements may be made to the embodiments without departing from the scope of this application, and the components in this application may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery, **characterized in that**, the battery comprises:
a plurality of battery cells (1), wherein the battery cells (1) comprise an explosion-proof valve (11);
a fume collecting component (2), disposed on a side of the battery cells (1), the side on which the explosion-proof valve (11) is disposed, wherein the fume collecting component (2) comprises a fume collecting chamber (21), and the fume collecting chamber (21) is in fluid communication with a pressure relief port of the explosion-proof valve (11); and
an exhaust pipe (3), fluidly communicating with the fume collecting chamber (21) and configured to guide a gas in the fume collecting chamber (21) to a preset position.

2. The battery according to claim 1, **characterized in that**, the battery further comprises a harness plate (4), the harness plate (4) is mounted on the plurality of battery cells (1), the fume collecting component (2) is connected to the harness plate (4), and the harness plate (4) comprises a first through-hole (41) that implements fluid communication between the pressure relief port of the explosion-proof valve (11) and the fume collecting chamber (21).

3. The battery according to claim 1 or 2, **characterized in that**, the battery further comprises a connection wire (5) configured to be electrically connected to the battery cells (1), and the connection wire (5) is fixed to a side of the fume collecting component (2), the side being away from the battery cells (1).

4. The battery according to claim 3, **characterized in that**, a groove (22) is created on the side of the fume collecting component (2), the side being away from the battery cells (1); and the connection wire (5) is fixed in the groove (22).

5. The battery according to any one of claims 2 to 4, **characterized in that** the battery further comprises a sealing element disposed between the pressure relief port of the explosion-proof valve (11) and the fume collecting chamber (21).

6. The battery according to claim 5, **characterized in that**, the sealing element comprises a first sealing element (8) disposed between the harness plate (4) and the fume collecting component (2), and the first sealing element (8) comprises a second through-hole (81) that communicates the first through-hole (41) to the fume collecting chamber (21).

7. The battery according to claim 5 or 6, **characterized in that**, the sealing element comprises a second sealing element (9) disposed between the harness plate (4) and the battery cells (1), and the second sealing element (9) comprises a third through-hole (91) that exposes the explosion-proof valve (11).

8. The battery according to any one of claims 1 to 7, **characterized in that**, the plurality of battery cells (1) are arranged side by side along a first direction, and the fume collecting chamber (21) extends along the first direction to cover the explosion-proof valve (11) of the plurality of battery cells (1).

9. The battery according to claim 8, **characterized in that**, the exhaust pipe (3) is connected to a side of the fume collecting chamber (21), the side being perpendicular to the first direction; and the exhaust pipe (3) comprises a part parallel to the first direction.

10. The battery according to any one of claims 1 to 9, **characterized in that**, the battery further comprises a housing, a first feeding pipe, and a second feeding pipe; the fume collecting component (2) and the plurality of battery cells (1) are disposed in the housing; both the first feeding pipe and the second feeding pipe communicate with an inner space of the housing; the first feeding pipe is configured to feed a cooling gas into the inner space of the housing; the second feeding pipe is configured to expel a gas out of the inner space of the housing; and the exhaust pipe (3) is fluidly isolated from the first feeding pipe and the second feeding pipe.

11. An electrical device, comprising the battery according to any one of claims 1 to 10, wherein the battery is configured to supply electrical energy to the electrical device.

12. A battery manufacturing method, comprising:
providing a plurality of battery cells (1), a fume collecting component (2), and an exhaust pipe (3), wherein the battery cells (1) comprise an explosion-proof valve (11), and the fume collecting component (2) comprises a fume collecting chamber (21); and
fitting the fume collecting component (2) onto a side of the battery cells (1), the side on which the explosion-proof valve (11) is disposed, wherein a pressure relief port of the explosion-proof valve (11) is in fluid communication with the fume collecting chamber (21), and the exhaust pipe (3) is in fluid communication with the fume collecting chamber (21) to guide a gas in the fume collecting chamber (21) to a preset position.
